(19) Europäisches Patentamt
European Patent Office
Office européen des brevets

(11) **EP 4 618 637 A1**

(12) **EUROPEAN PATENT APPLICATION**
published in accordance with Art. 153(4) EPC

(43) Date of publication:
**17.09.2025 Bulletin 2025/38**

(21) Application number: **23887901.9**

(22) Date of filing: **01.11.2023**

(51) International Patent Classification (IPC):
**H04W 52/14** (2009.01)

(52) Cooperative Patent Classification (CPC):
**H04L 1/18; H04L 5/00; H04W 52/14; H04W 72/044; H04W 72/0446; H04W 72/0453**

(86) International application number:
**PCT/CN2023/129078**

(87) International publication number:
**WO 2024/099211 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **11.11.2022 CN 202211410626**

(71) Applicant: **Apogee Networks, LLC
Dallas, TX 75201 (US)**

(72) Inventors:
• **JIANG, Qi
Shanghai 201206 (CN)**
• **ZHANG, Xiaobo
Shanghai 201206 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **METHOD USED FOR NODES OF WIRELESS COMMUNICATION AND APPARATUS**

(57) Disclosed in the present application are a method used for nodes of wireless communication and an apparatus. The method comprises: a node first receiving a first signaling, the first signaling being used for determining a first time-frequency resource set; and then determining a first power value and a second power value, and sending in the first time-frequency resource set at least the former among a first sub-signal or a second sub-signal, the first sub-signal and the second sub-signal respectively corresponding to two transmission blocks. The first sub-signal uses the first power value, and the second power value is associated with the second sub-signal. The first signaling is used for determining a first reference signal resource and a second reference signal resource, the first reference signal resource and the second reference signal resource are respectively used for determining the first power value and the second power value, and the sum of the first power value and the second power value is used for determining whether the second sub-signal is sent. The present application improves the determination mode of sending power of a terminal, thereby improving the system performance.

FIG. 1

## Description

## Technical Field

The present application relates to a transmission method and an apparatus in a wireless communication system, in particular to a transmission scheme and an apparatus for determining uplink power in wireless communication.

## Background Art

A 5G wireless cellular communication network system (5G-RAN) enhances the uplink power control of UE (User Equipment) on the basis of original LTE (Long-Term Evolution). Compared with the LTE, because a 5G NR system does not have a CRS (Common Reference Signal), the pathloss measurement required for the uplink power control needs to be performed by using a CSI-RS (Channel State Information Reference Signal) and an SSB (SS/PBCH Block, synchronization signal/physical broadcast channel block). In addition, the biggest feature of the NR system is the introduction of a beam management mechanism. A plurality of different transmitting and reception beams can be used for a terminal, and thus the terminal is required to be able to measure a plurality of pathlosses corresponding to a plurality of beams, wherein one way to determine the pathloss is achieved by indicating to a certain associated downlink RS (Reference Signal) resource by an SRI (Sounding Reference Signal Resource Indicator) in DCI (Downlink Control Information).

In the discussion of NR R17 and R18, the scenario of configuring a plurality of panels at a terminal side has been accepted, and meanwhile the transmission mode of sending a plurality of CWs (Codewords) at the terminal side is also supported. In turn, the impact of the introduction of the above-mentioned new scheme on the power control also needs to be considered accordingly.

## Summary of the Invention

In the discussion of NR R17 and R18, the sending of the terminal was enhanced. Therein, one important aspect is the introduction of two panels. The two panels can be used for the terminal to perform the sending on two sending beams, so as to obtain better spatial diversity/-multiplexing gains. Meanwhile, from the perspective of improving transmission efficiency, the two panels and the mode of simultaneous transmission of two CWs can be also used for the existing uplink transmission based on a configured grant. However, one important indicator for uplink sending is a sending power value, and the determination of the maximum sending power of the existing UE is all designed based on the condition of one panel, without considering the relationship and limitation of the sending power introduced between the two panels.

In view of the problem of the uplink power control in the above-mentioned multi-panel scenario, the present application discloses a solution. It should be explained that in the description of the present application, the multi-panel scenario is only used as one typical application scenario or example; the present application is also applicable to other scenarios in which similar problems are faced, for example, a single-panel scenario, or is directed at different technical fields, such as the technical field other than the uplink power control, for example, the field of measurement reporting and the fields of uplink data transmission and other non-uplink power control, so as to achieve similar technical effects. In addition, the use of a unified solution for different scenarios (including but not limited to the multi-panel scenario) also facilitates the reduction of hardware complexity and costs. In the absence of conflicts, the embodiments in any node of the present application and the features in the embodiments can be applied to any other node. In the absence of conflicts, the embodiments of the present application and the features in the embodiments can be arbitrarily combined with each other. In particular, the interpretation of the terminologies, nouns, functions, and variables in the present application (if not specifically stated) can refer to the definitions in the 3GPP specification protocols TS36 series, TS38 series, and TS37 series. If necessary, reference may be made to 3GPP standards TS38.211, TS38.212, TS38.213, TS38.214, TS38.215, TS38.321, TS38.331, TS38.305, and TS37.355 to assist in understanding the present application.

The present application discloses a method used for a first node of wireless communication, comprising:

receiving a first signaling, the first signaling being used for determining a first time-frequency resource set; and
determining a first power value and a second power value, and sending in the first time-frequency resource set at least a first sub-signal among the first sub-signal or a second sub-signal, wherein the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, one feature of the above-mentioned method is characterized in that: when the configured grant transmission of the terminal supports the simultaneous sending of two CWs, whether one of the CWs is sent is related to the sum of the sending power values corresponding to the two CWs.

As one embodiment, another feature of the above-mentioned method is characterized in that: the transmission of the two CWs corresponds to different power control parameters, respectively, which in turn leads to a situation where the power changes of the two CWs are inconsistent. The above-mentioned scheme ensures that the total power of the configured grant transmission will not be higher than an upper limit of the terminal transmission power.

According to one aspect of the present application, when the sum of the first power value and the second power value is not greater than a first threshold value, the second sub-signal is sent in the first time-frequency resource set; and when the sum of the first power value and the second power value is greater than the first threshold value, the second sub-signal is abandoned from being sent in the first time-frequency resource set.

According to one aspect of the present application, the first signaling is associated with one configured grant index, and the first sub-signal and the second sub-signal are both directed at the configured grant index.

According to one aspect of the present application, the first signaling comprises a first parameter and a second parameter, the first parameter is used for determining a power control loop used by the first sub-signal, and the second parameter is used for determining a power control loop used by the second sub-signal.

As one embodiment, one feature of the above-mentioned method is characterized in that: different power control loops are used for the two CWs to ensure the flexibility of power control.

According to one aspect of the present application, a configured grant information block comprises a third parameter and a fourth parameter, the third parameter is used for determining P0 and Alpha used by the first sub-signal, and the fourth parameter is used for determining P0 and Alpha used by the second sub-signal.

As one embodiment, one feature of the above-mentioned method is characterized in that: different power control parameters are used for the two CWs to ensure the flexibility of power control.

According to one aspect of the present application, the first signaling comprises a fifth parameter, and the fifth parameter is simultaneously applied to the first sub-signal and the second sub-signal; and the fifth parameter is related to resource allocation.

According to one aspect of the present application, the first signaling comprises a sixth parameter, the sixth parameter is used for determining a first integer, the first integer corresponds to a quantity of HARQ processes occupied by the configured grant transmission corresponding to the first signaling, and the first integer is a positive integer greater than 1; and an HARQ process number corresponding to the first sub-signal and an HARQ (Hybrid Automatic Repeat reQuest) process number corresponding to the second sub-signal are both related to the first integer.

As one embodiment, one feature of the above-mentioned method is characterized in that: the two CWs share the same quantity of HARQ processes.

According to one aspect of the present application, when a first signal does not comprise the second sub-signal, the first sub-signal carries first information, and the first information is used for indicating that only the first sub-signal among the first sub-signal and the second sub-signal is sent in the first time-frequency resource set, or the first information is used for indicating that the second sub-signal is abandoned from being sent in the first time-frequency resource set.

As one embodiment, one feature of the above-mentioned method is characterized in that: a receiving end for the second sub-signal is notified that the second sub-signal is not sent, in turn releasing a part of the resources reserved for the configured grant.

The present application discloses a method used for a second node of wireless communication, comprising:

sending a first signaling, the first signaling being used for determining a first time-frequency resource set; and
receiving in the first time-frequency resource set at least a first sub-signal among the first sub-signal or a second sub-signal,
wherein the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

According to one aspect of the present application, when the sum of the first power value and the second power value is not greater than a first threshold value, the second sub-signal is sent in the first time-frequency resource set; and when the sum of the first power value and the second power value is greater than the first threshold value, the second sub-signal is abandoned from being sent in the first time-frequency resource set.

According to one aspect of the present application, the first signaling is associated with one configured grant index, and the first sub-signal and the second sub-signal are both directed at the configured grant index.

According to one aspect of the present application, the first signaling comprises a first parameter and a second parameter, the first parameter is used for determining a power control loop used by the first sub-signal, and the second parameter is used for determining a power control loop used by the second sub-signal.

According to one aspect of the present application, a configured grant information block comprises a third parameter and a fourth parameter, the third parameter is used for determining P0 and Alpha used by the first sub-signal, and the fourth parameter is used for determining P0 and Alpha used by the second sub-signal.

According to one aspect of the present application, the first signaling comprises a fifth parameter, and the fifth parameter is simultaneously applied to the first sub-signal and the second sub-signal; and the fifth parameter is related to resource allocation.

According to one aspect of the present application, the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

According to one aspect of the present application, when the first signal does not comprise the second sub-signal, the first sub-signal carries first information, and the first information is used for indicating that only the first sub-signal among the first sub-signal and the second sub-signal is sent in the first time-frequency resource set, or the first information is used for indicating that the second sub-signal is abandoned from being sent in the first time-frequency resource set.

The present application discloses a first node used for wireless communication, comprising:

a first receiver for receiving a first signaling, the first signaling being used for determining a first time-frequency resource set; and
a first transmitter for determining a first power value and a second power value, and sending in the first time-frequency resource set at least a first sub-signal among the first sub-signal or a second sub-signal, wherein the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

The present application discloses a second node used for wireless communication, comprising:

a second transmitter for sending a first signaling, the first signaling being used for determining a first time-frequency resource set; and
a second receiver for receiving in the first time-frequency resource set at least a first sub-signal among the first sub-signal or a second sub-signal, wherein the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the benefits of the scheme in the present application lie in the optimization of the determination of the uplink sending power value and the avoidance of resource waste for improving performance.

**Brief Description of the Drawings**

Other features, purposes, and advantages of the present application will become more apparent by reading the detailed description of the non-limiting embodiments with reference to the following figures:

FIG. 1 shows a processing flow chart of a first node according to one embodiment of the present application;
FIG. 2 shows a schematic diagram of a network architecture according to one embodiment of the present application;
FIG. 3 shows a schematic diagram of an embodiment of radio protocol architectures for a user plane and a control plane according to one embodiment of the present application;

FIG. 4 shows a schematic diagram of a first communication device and a second communication device according to one embodiment of the present application;

FIG. 5 shows a flow chart of a first signaling according to one embodiment of the present application;

FIG. 6 shows a flow chart of a second sub-signal according to one embodiment of the present application;

FIG. 7 shows a schematic diagram of a first signaling according to one embodiment of the present application;

FIG. 8 shows a schematic diagram of a first node according to one embodiment of the present application;

FIG. 9 shows a schematic diagram of an antenna port and an antenna port group according to one embodiment of the present application;

FIG. 10 shows a structural block diagram of a processing apparatus in a first node device according to one embodiment of the present application; and

FIG. 11 shows a structural block diagram of a processing apparatus in a second node device according to one embodiment of the present application.

**Detailed Description of Embodiments**

The technical solution of the present application will be further described in detail below in conjunction with the accompanying drawings. It should be explained that in the absence of conflicts, the embodiments of the present application and the features in the embodiments can be arbitrarily combined with each other.

**Embodiment 1**

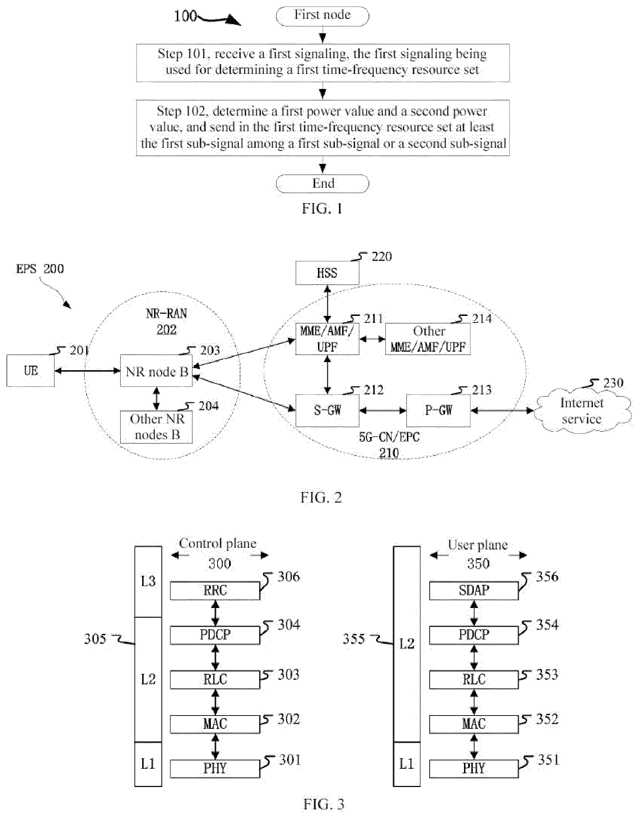

Embodiment 1 illustrates a processing flow chart of one first node, as shown in FIG. 1. In 100 shown in FIG. 1, each block represents one step. In Embodiment 1, a first node of the present application receives a first signaling in step 101, the first signaling being used for determining a first time-frequency resource set; and determines a first power value and a second power value, and sends in the first time-frequency resource set at least a first sub-signal among the first sub-signal or a second sub-signal in step 102.

In Embodiment 1, the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the first signaling comprises DCI (Downlink Control Information).

As one embodiment, the first signaling is used for activating configured grant transmission, and the configured grant transmission comprises the first sub-signal and the second sub-signal.

As one embodiment, the first signaling is used for activating PUSCH (Physical Uplink Shared Channel) transmission of a configured grant, and the PUSCH of the configured grant comprises the first sub-signal and the second sub-signal.

As one embodiment, a physical layer channel occupied by the first signaling comprises a PDCCH (Physical Downlink Control Channel).

As one embodiment, CRC (Cyclic Redundancy Check) comprised in the first signaling is scrambled by CS-RNTI (Configured Grant Radio Network Temporary Identity).

As one embodiment, the first signaling comprises an RRC signaling.

As one embodiment, the first signaling is used for configuring uplink transmission without a dynamic grant.

As one embodiment, the first signaling comprises ConfiguredGrantConfig IE (Information Element) in TS 38.331.

As one embodiment, the first signaling comprises one or more fields in ConfiguredGrantConfig IE in TS 38.331.

As one embodiment, the name of the RRC signaling bearing the first signaling comprises Configured.

As one embodiment, the name of the RRC signaling bearing the first signaling comprises Grant.

As one embodiment, the first signaling is used for indicating the first time-frequency resource set.

As one embodiment, the first time-frequency resource set occupies a positive integer number of REs (Resource Elements) greater than 1.

As one embodiment, the first time-frequency resource set occupies a positive integer number of multi-carrier symbols in a time domain.

As one embodiment, the first time-frequency resource set occupies a frequency domain resource corresponding to a positive integer number of resource blocks in a frequency domain.

As one embodiment, the first time-frequency resource set corresponds to one uplink transmission of the configured grant.

As one embodiment, the first sub-signal and the second sub-signal both correspond to the configured grant of Type 1.

As one embodiment, the first sub-signal and the second sub-signal both correspond to the configured grant of Type 2.

As one embodiment, the first sub-signal and the second sub-signal constitute one PUSCH.

As one embodiment, the first sub-signal and the second sub-signal correspond to two PUSCHs, respectively.

As one embodiment, the first transport block is one TB (Transport Block).

As one embodiment, the second transport block is one TB.

As one embodiment, the first transport block comprises one CBG (Code Block Group).

As one embodiment, the second transport block comprises one CBG.

As one embodiment, the first transport block comprises one bit block.

As one embodiment, the second transport block comprises one bit block.

As one embodiment, the first transport block and the second transport block are different.

As one embodiment, the first transport block and the second transport block are the same.

As one embodiment, the same bit block is used for generating the first transport block and the second transport block.

As one embodiment, the unit of the first power value is dBm (millidecibel).

As one embodiment, the unit of the first power value is milliwatt.

As one embodiment, the unit of the second power value is dBm.

As one embodiment, the unit of the second power value is milliwatt.

As one embodiment, the meaning that the second power value is associated with the second sub-signal comprises: when the second sub-signal is sent, sending power of the second sub-signal is the second power value.

As one embodiment, the meaning that the second power value is associated with the second sub-signal comprises: the second power value is used for determining whether the second sub-signal is sent.

As one embodiment, the first signaling is used for indicating the first reference signal resource and the second reference signal resource.

As one embodiment, the first signaling is used for explicitly indicating the first reference signal resource and the second reference signal resource.

As one embodiment, the first signaling is used for implicitly indicating the first reference signal resource and the second reference signal resource.

As one embodiment, the first signaling comprises two SRIs (Sounding Reference Signal Resource Indicators), the two SRIs correspond to two SRS resources, respectively, and the two SRS resources are associated with the first reference signal resource and the second reference signal resource, respectively.

As one embodiment, the first signaling comprises two SRIs, and two Code Points corresponding to the two SRIs are respectively associated with the first reference signal resource and the second reference signal resource.

As one embodiment, the first signaling is used for indicating a first reference signal resource group and a second reference signal resource group, the first reference signal resource group is used for determining the spatial characteristics of the first sub-signal, and the second reference signal resource group is used for determining the spatial characteristics of the second sub-signal.

As one sub-embodiment of this embodiment, one reference signal resource in the first reference signal resource group is associated with the first reference signal resource, and one reference signal resource in the second reference signal resource group is associated with the second reference signal resource.

As one sub-embodiment of this embodiment, one reference signal resource in the first reference signal resource group is the first reference signal resource, and one reference signal resource in the second reference signal resource group is the second reference signal resource.

As one embodiment, the first signaling is DCI, the first signaling comprises a first field, the first field in the first signaling is used for indicating a first reference signal resource group, the first reference signal resource group is used for determining the spatial characteristics of the first sub-signal, and a value of the first field in the first signaling is used for determining the first reference signal resource.

As one sub-embodiment of this embodiment, the first field is an SRS resource indicator field.

As one sub-embodiment of this embodiment, one reference signal resource in the first reference signal resource group is associated with the first reference signal resource.

As one sub-embodiment of this embodiment, one reference signal resource in the first reference signal resource group is the first reference signal resource.

As one embodiment, the first signaling is DCI, the first signaling comprises a second field, the second field in the first signaling is used for indicating a second reference signal resource group, the second reference signal resource group is used for determining the spatial characteristics of the second sub-signal, and a value of the second field in the first signaling is used for determining the second reference signal resource.

As one sub-embodiment of this embodiment, the second field is a second SRS resource indicator field.

As one sub-embodiment of this embodiment, one reference signal resource in the second reference signal resource group is associated with the second reference signal resource.

As one sub-embodiment of this embodiment, one reference signal resource in the second reference signal resource group is the second reference signal resource.

As one embodiment, the first reference signal resource group corresponds to one SRS resource set.

As one embodiment, the second reference signal resource group corresponds to one SRS resource set.

As one embodiment, the first reference signal resource group comprises one or more SRS resources.

As one embodiment, the second reference signal resource group comprises one or more SRS resources.

As one embodiment, the first reference signal resource and the second reference signal resource are used respectively for determining a first pathloss and a second pathloss, and the first pathloss and the second pathloss are respectively used for determining the first power value and the second power value.

As one embodiment, the first reference signal resource comprises an SSB (SS/PBCH Block, synchronization signal/physical broadcast channel block).

As one embodiment, the second reference signal resource comprises the SSB.

As one embodiment, the first reference signal resource corresponds to one SSB-Index.

As one embodiment, the second reference signal resource corresponds to one SSB-Index.

As one embodiment, the first reference signal resource comprises a CSI-RS (Channel State Information Reference Signal) resource.

As one embodiment, the second reference signal resource comprises the CSI-RS resource.

As one embodiment, the first reference signal resource corresponds to one NZP-CSI-RS-ResourceId.

As one embodiment, the second reference signal resource corresponds to one NZP-CSI-RS-ResourceId.

As one embodiment, the first reference signal resource comprises an SRS resource.

As one embodiment, the second reference signal resource comprises the SRS resource.

As one embodiment, the first reference signal resource corresponds to one SRS-ResourceId.

As one embodiment, the second reference signal resource corresponds to one SRS-ResourceId.

As one embodiment, the first sub-signal is predefined in the first sub-signal and the second sub-signal.

As one embodiment, the first sub-signal and the second sub-signal correspond to two CORESET (Control Resource Set) Pool Indexes, respectively, and the CORESET Pool Index corresponding to the first sub-signal is the smaller one of the two CORESET Pool Indexes.

As one embodiment, the first sub-signal and the second sub-signal correspond to two CORESET Pool Indexes, respectively, and the CORESET Pool Index corresponding to the first sub-signal is the larger one of the two CORESET Pool Indexes.

As one embodiment, the first sub-signal and the second sub-signal correspond to two SRS-ResourceSetIds, respectively, and the SRS-ResourceSetId corresponding to the first sub-signal is the smaller one of the two SRS-ResourceSetIds.

As one embodiment, the first sub-signal and the second sub-signal correspond to two SRS-ResourceSetIds, respectively, and the SRS-ResourceSetId corresponding to the first sub-signal is the larger one of the two SRS-ResourceSetIds.

As one embodiment, when the second sub-signal is sent in the first time-frequency resource set, the time-frequency resources occupied by the first sub-signal overlap the time-frequency resources occupied by the second sub-signal.

As one embodiment, when the second sub-signal is sent in the first time-frequency resource set, the time domain resources occupied by the first sub-signal overlap the time domain resources occupied by the second sub-signal.

As one embodiment, when the second sub-signal is sent in the first time-frequency resource set, the time domain resources occupied by the first sub-signal overlap the time domain resources occupied by the second sub-signal, and the frequency domain resources occupied by the first sub-signal are orthogonal to the frequency domain resources occupied by the second sub-signal.

As one embodiment, the multi-carrier symbol in the present application is an OFDM (Orthogonal Frequency Division Multiplexing) symbol.

As one embodiment, the multi-carrier symbol in the present application is an SC-FDMA (Single-Carrier Frequency Division Multiple Access) symbol.

As one embodiment, the multi-carrier symbol in the present application is a DFT-S-OFDM (Discrete Fourier Transform Spread Orthogonal Frequency Division Multiplexing) symbol.

As one embodiment, the multi-carrier symbol in the present application is an IFDMA (Interleaved Frequency Division Multiple Access) symbol.

As one embodiment, the first sub-signal and the second sub-signal are sent without a dynamic grant.

As one embodiment, the first sub-signal comprises a radio signal.

As one embodiment, the first sub-signal comprises a baseband signal.

As one embodiment, the second sub-signal comprises a radio signal.

As one embodiment, the second sub-signal comprises a baseband signal.

As one embodiment, the first sub-signal and the first reference signal resource are QCL (Quasi Co-located).

As one embodiment, the second sub-signal and the second reference signal resource are QCL.

## Embodiment 2

Embodiment 2 illustrates a schematic diagram of a network architecture, as shown in FIG. 2.

FIG. 2 illustrates a diagram of a network architecture 200 for 5G NR, LTE (Long-Term Evolution) and LTE-A (Long-Term Evolution Advanced) systems. The 5G NR or LTE network architecture 200 may be referred to as an EPS (Evolved Packet System) 200 or some other suitable terms. The EPS 200 may comprise one piece of UE (User Equipment) 201, an NR-RAN (Next Generation Radio Access Network) 202, an EPC (Evolved Packet Core)/5G-CN (5G-Core Network) 210, an HSS (Home Subscriber Server) 220, and an Internet Service 230. The EPS may be interconnected with other access networks, but these entities/interfaces are not shown for simplicity. As shown in the figure, the EPS provides packet-switched services, but those skilled in the art will readily appreciate that various concepts presented throughout the present application may be extended to a network providing a circuit-switched service or other cellular networks. The NR-RAN comprises an NR Node B (gNB) 203 and other gNB204. The gNB203 provides user and control plane protocol terminations toward the UE201. The gNB203 may be connected to the other gNB204 via an Xn interface (for example, backhaul). The gNB203 may also be referred to as a base station, a base transceiving station, a radio base station, a radio transceiver, a transceiver function, a basic service set (BSS), an extended service set (ESS), a TRP (transmit receive node), or some other suitable terms. The gNB203 provides an access point to the EPC/5G-CN 210 for the UE201. Examples of the UE201 comprises a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (for example, an MP3 player), a camera, a game console, a drone, an aircraft, a narrowband Internet of Things device, a machine type communication device, a land vehicle, an automobile, a wearable device, or any other similarly functional apparatuses. Those skilled in the art may also call the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes a signaling between the UE201 and the EPC/5G-CN 210. Generally, the MME/AMF/UPF211 provides bearer and connection management. All user IP (Internet Protocol) packets are transmitted by the S-GW212, and the S-GW212 itself is connected to the P-GW213. The P-GW213 provides UE IP address allocation and other functions. The P-GW213 is connected to an Internet service 230. The Internet service 230 comprises an Internet protocol service corresponding to an operator, and may specifically comprise the Internet, the intranet, an IMS (IP Multimedia Subsystem) and a packet switching streaming service.

As one embodiment, the UE201 corresponds to the first node in the present application.

As one embodiment, the UE201 supports simultaneous sending of a plurality of panels.

As one embodiment, the UE201 supports and is based on power sharing between multi-panels.

As one embodiment, the UE201 supports a plurality of uplink RFs (Radio Frequencies).

As one embodiment, the UE201 supports simultaneous sending of a plurality of uplink RFs.

As one embodiment, the UE201 supports reporting of a plurality of UE capability value sets.

As one embodiment, the NR node B corresponds to the second node in the present application.

As one embodiment, the NR node B supports simultaneous reception of signals from a plurality of panels of one terminal.

As one embodiment, the NR node B supports reception of signals sent by a plurality of uplink RFs (Radio Frequencies) from the same terminal.

As one embodiment, the NR node B is one base station.

As one embodiment, the NR node B is one cell.

As one embodiment, the NR node B comprises a plurality of cells.

As one embodiment, the first node in the present application corresponds to the UE201, and the second node in the present application corresponds to the NR node B.

### Embodiment 3

Embodiment 3 shows a schematic diagram of an embodiment of radio protocol architectures for one user plane and one control plane according to the present application, as shown in FIG. 3. FIG. 3 is a schematic diagram illustrating an embodiment of radio protocol architectures for a user plane 350 and a control plane 300, and FIG. 3 exhibits the radio protocol architecture for the control plane 300 between a first communication node device (UE, gNB, or RSU in V2X) and a second communication node device (gNB, UE, or RSU in V2X) by using three layers: layer 1, layer 2, and layer 3. The layer 1 (L1 layer) is the lowest layer and implements various PHY (physical layer) signal processing functions. The L1 layer will be herein referred to as PHY301. The layer 2 (L2 layer) 305 is above PHY301 and is responsible for the link between the first communication node device and the second communication node device by PHY301. The L2 layer 305 comprises a MAC (Medium Access Control) sublayer 302, an RLC (Radio Link Control) sublayer 303, and a PDCP (Packet Data Convergence Protocol) sublayer 304, which terminate at the second communication node device. The PDCP sublayer 304 provides multiplexing between different radio bearer and logical channels. The PDCP sublayer 304 also provides security by encrypting data packets, and the PDCP sublayer 304 also provides zone-crossing mobility support of the first communication node device for the second communication node device. The RLC sublayer 303 provides segmentation and reassembly of upper-layer data packets, retransmission of lost data packets, and reordering of data packets to compensate for unordered reception caused by HARQ. The MAC sublayer 302 provides multiplexing between logical and transmission channels. The MAC sublayer 302 is also responsible for allocating, between the first communication node devices, various radio resources (for example, resource blocks) in one cell. The MAC sublayer 302 is also responsible for HARQ operations. The RRC (Radio Resource Control) sublayer 306 in the layer 3 (L3 layer) in the control plane 300 is responsible for obtaining radio resources (i.e., radio bearers) and configuring a lower layer by using the RRC signaling between the second communication node device and the first communication node device. The radio protocol architecture for the user plane 350 comprises a layer 1 (L1 layer) and a layer 2 (L2 layer). The radio protocol architecture for the first communication node device and the second communication node device in the user plane 350 for the physical layer 351, the PDCP sublayer 354 in the L2 layer 355, the RLC sublayer 353 in the L2 layer 355, and the MAC sublayer 352 in the L2 layer 355 is substantially the same as that in the control plane 300 for the corresponding layers and sublayers, but the PDCP sublayer 354 also provides header compression for upper-layer data packets to reduce radio transmission overhead. The L2 layer 355 in the user plane 350 further comprises an SDAP (Service Data Adaptation Protocol) sublayer 356, and the SDAP sublayer 356 is responsible for mapping between a QoS stream and a data radio bearer (DRB) to support the diversity of services. Although not shown, the first communication node device may have several upper layers above the L2 layer 355, comprising a network layer (for example, an IP layer) terminated at P-GW on the network side and an application layer terminated at the connected other end (for example, remote UE, a server, etc.).

As one embodiment, the radio protocol architecture in FIG. 3 is applicable to the first node in the present application.

As one embodiment, the radio protocol architecture in FIG. 3 is applicable to the second node in the present application.

As one embodiment, the PDCP304 of the second communication node device is used for generating the scheduling of the first communication node device.

As one embodiment, the PDCP354 of the second communication node device is used for generating the scheduling of the first communication node device.

As one embodiment, the first signaling is generated in the PHY301 or the PHY351.

As one embodiment, the first signaling is generated in the MAC302 or the MAC352.

As one embodiment, the first signaling is generated in the RRC306.

As one embodiment, the first sub-signal is generated in the MAC302 or the MAC352.

As one embodiment, the first sub-signal is generated in the RRC306.

As one embodiment, the second sub-signal is generated in the MAC302 or the MAC352.

As one embodiment, the second sub-signal is generated in the RRC306.

As one embodiment, the first node is one terminal.

As one embodiment, the first node is one relay.

As one embodiment, the second node is one relay.

As one embodiment, the second node is one base station.

As one embodiment, the second node is one gNB.

As one embodiment, the second node is one TRP (Transmitter Receiver Point).

As one embodiment, the second node is used for managing a plurality of TRPs.

As one embodiment, the second node is a node for managing a plurality of cells.

**Embodiment 4**

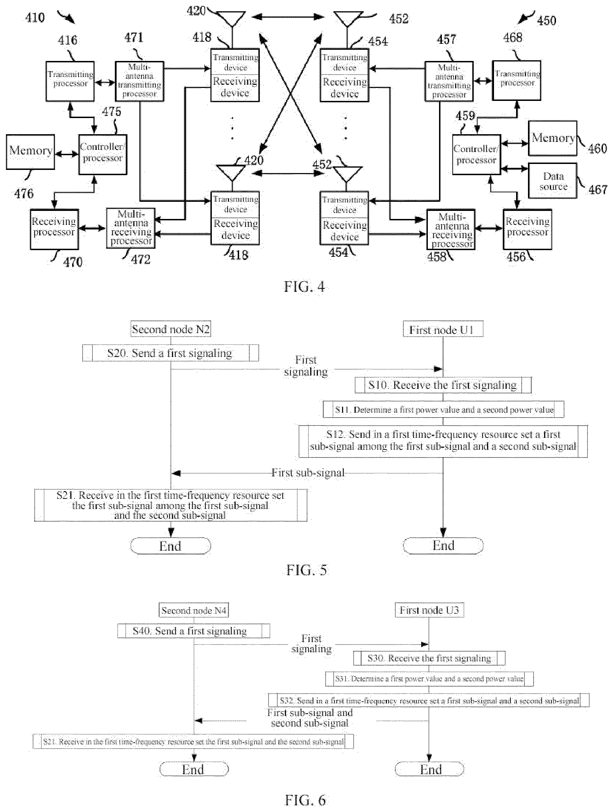

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454 and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, an upper-layer data packet from a core network is provided to the controller/processor 475. The controller/processor 475 implements the functionality of the L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of a lost packet, and for a signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410, as well as mapping of signal constellations based on various modulation schemes (for example, binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding (comprising codebook-based precoding and non-codebook-based precoding) and beamforming processing on the coded and modulated symbols to generate one or more spatial streams. The transmitting processor 416 then maps each spatial stream to a subcarrier, multiplexes with a reference signal (for example, a pilot frequency) in the time domain and/or frequency domain, and subsequently uses an inverse fast Fourier transform (IFFT) to generate a physical channel carrying a time-domain multi-carrier symbol stream. Subsequently, the multi-antenna transmitting processor 471 performs a sending analog precoding/beamforming operation on the time-domain multi-carrier symbol stream. Each transmitting device 418 converts a baseband multi-carrier symbol stream provided by the multi-antenna transmitting processor 471 into a radio frequency stream, which is subsequently provided to a different antenna 420.

In the transmission from the second communication device 410 to the first communication device 450, at the first communication device 450, each receiving device 454 receives a signal by a corresponding antenna 452 thereof. Each receiving device 454 recovers the information modulated onto the RF carrier and converts the RF stream into the baseband multi-carrier symbol stream to be provided to the receiving processor 456. The receiving processor 456 and the multi-antenna receiving processor 458 implement various signal processing functions of the L1 layer. The multi-antenna receiving processor 458 performs a receiving analog precoding/beamforming operation on the baseband multi-carrier symbol stream from the receiving device 454. The receiving processor 456 uses a fast Fourier transform (FFT) to convert the baseband multi-carrier symbol stream after the receiving analog precoding/beamforming operation from the time domain to the frequency domain. In the frequency domain, a physical layer data signal and the reference signal are demultiplexed by the receiving processor 456, wherein the reference signal will be used for channel estimation, and the data signal is subjected to multi-antenna detection in the multi-antenna receiving processor 458 to recover any spatial stream with the first communication device 450 as the destination. The symbols on each spatial stream are demodulated and recovered in the receiving processor 456, and a soft decision is generated. Subsequently, the receiving processor 456 decodes and deinterleaves the soft decision to recover the upper-layer data and a control signal transmitted by the second communication device 410 on the physical channel. Subsequently, the upper-layer data and the control signal are provided to the controller/processor 459. The controller/processor 459 implements the functions of the L2 layer. The controller/processor 459 may be associated with a memory 460 storing program codes and data. The memory 460 may be referred to as a computer-readable medium. In the transmission from the second communication device 410 to the first communication device 450, the controller/processor 459 provides demultiplexing between transport and logical channels, packet reassembly, decryption, header decompression, and control signal processing to recover the upper-layer data packet from the core network. Subsequently, the upper-layer data packet is provided to all protocol layers above the L2 layer. Various control signals may also be provided to an L3 for L3 processing.

In the transmission from the first communication device 450 to the second communication device 410, at the first communication device 450, a data source 467 is used for providing the upper-layer data packet to the controller/processor 459. The data source 467 represents all protocol layers above the L2 layer. Similar to the sending function at the second communication device 410 described in the transmission from the second communication device 410 to the first communication device 450, the controller/processor 459 implements header compression, encryption, packet segmentation and reordering, and multiplexing between logical and transport channels based on wireless resource allocation, and implements L2 layer functions for the user plane and the control plane. The controller/processor 459 is also responsible for the retransmission of the lost packet, and for a signaling to the second communication device 410. The transmitting processor 468 performs modulation mapping and channel coding processing, and the multi-antenna transmitting processor 457 performs digital multi-antenna spatial precoding (comprising codebook-based precoding and non-codebook-based precoding) and beamforming processing. Subsequently, the transmitting processor 468 modulates the generated spatial stream into a multi-carrier/single-carrier symbol stream, which is provided to a different antenna 452 via the transmitting device 454 after an analog precoding/beamforming operation in the multi-antenna transmitting processor 457. Each transmitting device 454 first converts the baseband symbol stream provided by the multi-antenna transmitting processor 457 into a radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal by a corresponding antenna 420 thereof, converts the received radio frequency signal into a baseband signal, and provides the baseband signal to the multi-antenna receiving processor 472 and the receiving processor 470. The receiving processor 470 and the multi-antenna receiving processor 472 jointly implement the functions of the L1 layer. The controller/processor 475 implements the L2 layer functions. The controller/processor 475 may be associated with a memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover the upper-layer data packet from the UE450. The upper-layer data packet from the controller/processor 475 can be provided to the core network.

As one embodiment, the first communication device 450 apparatus comprises: at least one processor and at least one memory, wherein the at least one memory comprises a computer program code; the at least one memory and the computer program code are configured to be used with the at least one processor, and the first communication device 450 at least: first receives a first signaling, the first signaling being used for determining a first time-frequency resource set; and subsequently determines a first power value and a second power value, and sends in the first time-frequency resource set at least a first sub-signal among the first sub-signal or a second sub-signal; the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the first communication device 450 comprises: a memory storing a computer-readable instruction program, wherein the computer-readable instruction program generates actions when executed by at least one processor, and the actions comprise: first receiving a first signaling, the first signaling being used for determining a first time-frequency resource set; and subsequently determining a first power value and a second power value, and sending in the first time-frequency resource set at least a first sub-signal among the first sub-signal or a second sub-signal; the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the second communication device 410 apparatus comprises: at least one processor and at least one memory, wherein the at least one memory comprises a computer program code; the at least one memory and the computer program code are configured to be used with the at least one processor. The second communication device 410 apparatus at least: first sends a first signaling, the first signaling being used for determining a first time-frequency resource set; and subsequently receives in the first time-frequency resource set at least a first sub-signal among the first sub-signal or a second sub-signal; the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the second communication device 410 apparatus comprises: a memory storing a computer-readable instruction program, wherein the computer-readable instruction program generates actions when executed by at least one processor, and the actions comprise: first receiving a first signaling, the first signaling being used for determining a first time-frequency resource set; and subsequently receiving in the first time-frequency resource set at least a first sub-signal among the first sub-signal or a second sub-signal; the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the first communication device 450 corresponds to the first node in the present application.

As one embodiment, the second communication device 410 corresponds to the second node in the present application.

As one embodiment, the first communication device 450 is one piece of UE.

As one embodiment, the first communication device 450 is one terminal.

As one embodiment, the first communication device 450 is one relay.

As one embodiment, the second communication device 410 is one base station.

As one embodiment, the second communication device 410 is one relay.

As one embodiment, the second communication device 410 is one network device.

As one embodiment, the second communication device 410 is one serving cell.

As one embodiment, the second communication device 410 is one TRP.

As one embodiment, at least the first four of the antenna 452, the receiving device 454, the multi-antenna receiving processor 458, the receiving processor 456, and the controller/processor 459 are used for receiving the first signaling; and at least the first four of the antenna 420, the transmitting device 418, the multi-antenna transmitting processor 471, the transmitting processor 416, and the controller/processor 475 are used for sending the first signaling.

As one implementation, at least the first four of the antenna 452, the transmitting device 454, the multi-antenna transmitting processor 457, the transmitting processor 468, and the controller/processor 459 are used for determining a first power value and a second power value, and sending at least a first sub-signal among the first sub-signal or a second sub-signal in a first time-frequency resource set; and at least the first four of the antenna 420, the receiving device 418, the multi-antenna receiving processor 472, the receiving processor 470, and the controller/processor 475 are used for receiving at least a first sub-signal among the first sub-signal or a second sub-signal in a first time-frequency resource set.

**Embodiment 5**

Embodiment 5 illustrates a flow chart of one first signaling, as shown in FIG. 5. In FIG. 5, a first node U1 communicates with a second node N2 by a radio link. It is particularly explained that the order in the present embodiment does not limit the signal transmission order and the implementation order in the present application. In the absence of conflicts, the embodiment, sub-embodiment and subsidiary embodiment in Embodiment 5 can be applied to Embodiment 6; On the contrary, in the absence of conflicts, any embodiment, sub-embodiment and subsidiary embodiment in Embodiment 6 can be applied to Embodiment 5.

For **the first node U1**, a first signaling is received in step S10; a first power value and a second power value are determined in step S11; and a first sub-signal among the first sub-signal and a second sub-signal is sent in a first time-frequency resource set in step S12; and

for **the second node N2,** a first signaling is sent in step S20; and the first sub-signal among the first sub-signal and the second sub-signal is received in the first time-frequency resource set in step S21.

In Embodiment 5, the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining that the second sub-signal is abandoned from being sent in the first time-frequency resource set; and the first sub-signal and the second sub-signal are both based on transmission of a configured grant.

Typically, when the sum of the first power value and the second power value is greater than the first threshold value, the second sub-signal is abandoned from being sent in the first time-frequency resource set.

As one embodiment, the unit of the first threshold value is dBm.

As one embodiment, the unit of the first threshold value is milliwatt.

As one embodiment, the first threshold value is exclusive to the first node.

As one embodiment, the first threshold value corresponds to $P_{Total}^{Multi-Panel}$.

As one embodiment, the first threshold value corresponds to $P_{Total}$.

As one embodiment, the first threshold value corresponds to $P_{cmax}$.

As one embodiment, the first threshold value corresponds to the maximum sending power of the first node.

As one embodiment, the first threshold value is related to Category of the first node.

As one embodiment, the first threshold value is related to Capability of the first node.

As one embodiment, the first threshold value corresponds to $P_{CMAX,f,c}(i)$ in TS 38.331.

As one embodiment, the first threshold value corresponds to $P_{CMAX,f,c}(i)$ in Specification.

As one embodiment, the first threshold value corresponds to $P_{CMAX,f,c}(i)$ in Specification.

As one embodiment, the meaning that the second sub-signal is abandoned from being sent in the first time-frequency resource set comprises: sending power of the second sub-signal is equal to 0.

Typically, the first signaling is associated with one configured grant index, and the first sub-signal and the second sub-signal are both directed at the configured grant index.

As one embodiment, the configured grant index comprises configuredGrantConfigIndex.

As one embodiment, the configured grant index comprises configuredGrantConfigIndexMAC.

As one embodiment, the configured grant index is one positive integer.

As one embodiment, the configured grant index is one non-negative integer.

As one embodiment, the determination of the first sub-signal refers to the RRC signaling corresponding to the configured grant index.

As one embodiment, the determination of the second sub-signal refers to the RRC signaling corresponding to the configured grant index.

As one embodiment, the determination of the first sub-signal refers to an IE in TS 38.331 corresponding to the configured grant index.

As one embodiment, the determination of the second sub-signal refers to the IE in TS 38.331 corresponding to the configured grant index.

As one embodiment, the determination of the first sub-signal comprises at least one of the following:

- a time domain resource occupied by the first sub-signal;
- a frequency domain resource occupied by the first sub-signal;
- an HARQ process occupied by the first sub-signal;
- an MCS (Modulation and Coding Scheme) table used by the first sub-signal;
- rbg-Size used by the first sub-signal; and
- a spatial sending parameter corresponding to the first sub-signal.

As one sub-embodiment of this embodiment, the spatial sending parameters corresponding to the first sub-signal comprise at least one of SRI, an antenna port, precoding and Layer number, or QCL-info.

As one embodiment, the determination of the second sub-signal comprises at least one of the following:

- a time domain resource occupied by the second sub-signal;
- a frequency domain resource occupied by the second sub-signal;
- an HARQ process occupied by the second sub-signal;
- an MCS table used by the second sub-signal;
- rbg-Size used by the second sub-signal; and
- a spatial sending parameter corresponding to the second sub-signal.

As one sub-embodiment of this embodiment, the spatial sending parameters corresponding to the second sub-signal comprise at least one of SRI, an antenna port, precoding and number of layers, or QCL-info.

Typically, the first signaling comprises a first parameter and a second parameter, the first parameter is used for determining a power control loop used by the first sub-signal, and the second parameter is used for determining a power control loop used by the second sub-signal.

As one embodiment, the first parameter is determined by ConfiguredGrantConfig IE in TS 38.331.

As one embodiment, the second parameter is determined by ConfiguredGrantConfig IE in TS 38.331.

As one embodiment, the first parameter corresponds to powerControlLoopToUse in TS 38.331.

As one embodiment, the second parameter corresponds to powerControlLoopToUse in TS 38.331.

As one embodiment, the first parameter is associated with the first reference signal resource.

As one embodiment, the second parameter is associated with the second reference signal resource.

Typically, the configured grant information block comprises a third parameter and a fourth parameter, the third parameter is used for determining P0 and Alpha used by the first sub-signal, and the fourth parameter is used for determining P0 and Alpha used by the second sub-signal.

As one embodiment, the third parameter is determined by ConfiguredGrantConfig IE in TS 38.331.

As one embodiment, the fourth parameter is determined by ConfiguredGrantConfig IE in TS 38.331.

As one embodiment, the third parameter corresponds to P0-PUSCH-AlphaSetId in TS 38.331.

As one embodiment, the fourth parameter corresponds to the P0-PUSCH-AlphaSetId in TS 38.331.

As one embodiment, the third parameter is associated with the first reference signal resource.

As one embodiment, the fourth parameter is associated with the second reference signal resource.

Typically, the first signaling comprises a fifth parameter, and the fifth parameter is simultaneously applied to the first sub-signal and the second sub-signal; and the fifth parameter is related to resource allocation.

As one embodiment, the fifth parameter is determined by ConfiguredGrantConfig IE in TS 38.331.

As one embodiment, the fifth parameter comprises frequencyHopping in TS 38.331.

As one embodiment, the fifth parameter comprises DMRS-UplinkConfig in TS 38.331.

As one embodiment, the fifth parameter comprises mcs-Table in TS 38.331.

As one embodiment, the fifth parameter comprises mes-TableTransformPrecoder in TS 38.331.

As one embodiment, the fifth parameter comprises resourceAllocation in TS 38.331.

As one embodiment, the fifth parameter comprises rbg-Size in TS 38.331.

As one embodiment, the fifth parameter comprises transformPrecoder in TS 38.331.

As one embodiment, the fifth parameter comprises repK in TS 38.331.

As one embodiment, the fifth parameter comprises repK-RV in TS 38.331.

As one embodiment, the fifth parameter comprises periodicity in TS 38.331.

Typically, the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

As one embodiment, the sixth parameter is determined by ConfiguredGrantConfig IE in TS 38.331.

As one embodiment, the sixth parameter comprises nrofHARQ-Processes in TS 38.331.

As one embodiment, half of the first integer is used for determining an HARQ process number corresponding to the first sub-signal.

As one embodiment, half of the first integer is used for determining an HARQ process number corresponding to the second sub-signal.

As one embodiment, the second integer is used for determining the HARQ process number corresponding to the first sub-signal, and the third integer is used for determining the HARQ process number corresponding to the second sub-signal, and the sum of the second integer and the third integer is equal to the first integer.

As one sub-embodiment of this embodiment, the second integer is a positive integer.

As one sub-embodiment of this embodiment, the third integer is a positive integer.

As one sub-embodiment of this embodiment, the second integer is configured by the RRC signaling.

As one sub-embodiment of this embodiment, the third integer is configured by the RRC signaling.

As one sub-embodiment of this embodiment, the second integer is predefined.

Typically, when the first signal does not comprise the second sub-signal, the first sub-signal carries first information, and the first information is used for indicating that only the first sub-signal among the first sub-signal and the second sub-signal is sent in the first time-frequency resource set, or the second sub-signal is abandoned from being sent in the first time-frequency resource set.

As one embodiment, the first information comprises UCI (Uplink Control Information).

As one embodiment, the first information is AUL (Autonomous Uplink) transmission.

As one embodiment, the time-frequency resources occupied by the first information are fixed in the first time-frequency resource set.

As one embodiment, the first information is carried by a scrambling code.

As one embodiment, the first information is carried by a DMRS (Demodulation Reference Signal).

As one embodiment, the first information is carried by an SRS.

## Embodiment 6

Embodiment 6 illustrates a flow chart of one second sub-signal, as shown in FIG. 6. In

FIG. 6, a first node U3 communicates with a second node N4 by a radio link. It is particularly explained that the order in the present embodiment does not limit the signal transmission order and the implementation order in the present application. In the absence of conflicts, the embodiment, sub-embodiment and subsidiary embodiment in Embodiment 6 can be applied to Embodiment 5; On the contrary, in the absence of conflicts, any embodiment, sub-embodiment and subsidiary embodiment in Embodiment 5 can be applied to Embodiment 6.

For **the first node U3,** a first signaling is received in step S30; a first power value and a second power value are determined in step S31; and a first sub-signal and a second sub-signal are sent in a first time-frequency resource set in step S32; and

for **the second node N4,** a first signaling is sent in step S40; and the first sub-signal and the second sub-signal are received in the first time-frequency resource set in step S41.

In Embodiment 6, the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining that the second sub-signal is sent in the first time-frequency resource set; and the first sub-signal and the second sub-signal are both based on transmission of a configured grant.

As one embodiment, when the sum of the first power value and the second power value is not greater than a first threshold value, the second sub-signal is sent in the first time-frequency resource set.

As one embodiment, the first signaling is associated with one configured grant index, and the first sub-signal and the second sub-signal are both directed at the configured grant index.

As one embodiment, the first signaling comprises a first parameter and a second parameter, the first parameter is used for determining a power control loop used by the first sub-signal, and the second parameter is used for determining a power control loop used by the second sub-signal.

As one embodiment, a configured grant information block comprises a third parameter and a fourth parameter, the third parameter is used for determining P0 and Alpha used by the first sub-signal, and the fourth parameter is used for determining P0 and Alpha used by the second sub-signal.

As one embodiment, the first signaling comprises a fifth parameter, and the fifth parameter is simultaneously applied to the first sub-signal and the second sub-signal; and the fifth parameter is related to resource allocation.

As one embodiment, the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

## Embodiment 7

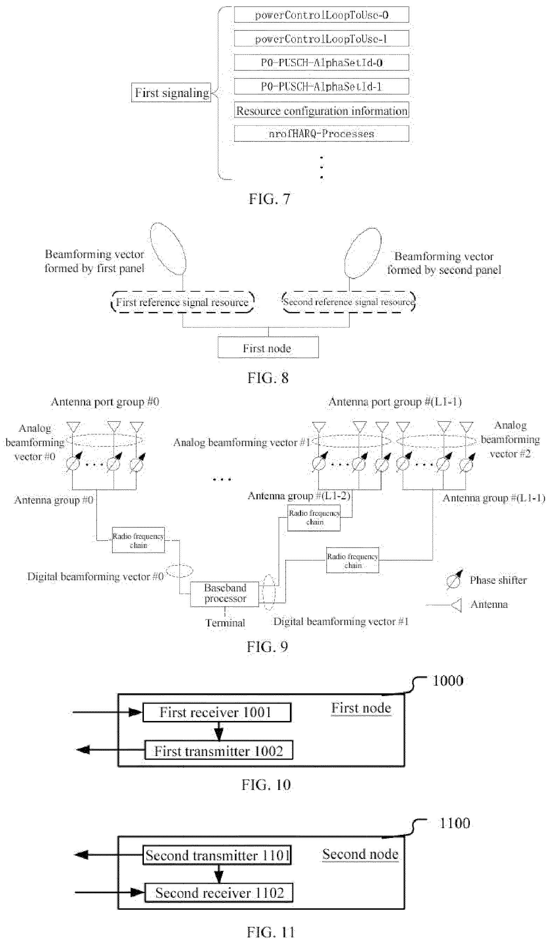

Embodiment 7 illustrates a schematic diagram of one first signaling, as shown in FIG. 7. In FIG. 7, the first signaling comprises ConfiguredGrantConfig IE in TS 38.331, and the first signaling comprises powerControl-LoopToUse-0 and powerControlLoopToUse-1; the first signaling comprises P0-PUSCH-AlphaSetId-0 and P0-PUSCH-AlphaSetId-1; and the first signaling comprises resource configuration information, and the first signaling comprises nrofHARQ-Processes.

As one embodiment, the powerControlLoop-ToUse-0 corresponds to a first parameter.

As one embodiment, the powerControlLoop-ToUse-0 corresponds to a first sub-signal.

As one embodiment, the powerControlLoop-ToUse-1 corresponds to a second parameter.

As one embodiment, the powerControlLoop-ToUse-1 corresponds to a second sub-signal.

As one embodiment, the P0-PUSCH-AlphaSetId-0 corresponds to a third parameter.

As one embodiment, the P0-PUSCH-AlphaSetId-0 corresponds to the first sub-signal.

As one embodiment, the P0-PUSCH-AlphaSetId-1 corresponds to a fourth parameter.

As one embodiment, the P0-PUSCH-AlphaSetId-1 corresponds to the second sub-signal.

As one embodiment, the resource configuration information corresponds to a fifth parameter.

As one embodiment, the resource configuration information is applied to the first sub-signal and the second sub-signal.

As one embodiment, the nrofHARQ-Processes corresponds to a sixth parameter.

As one embodiment, the nrofHARQ-Processes is applied to the first sub-signal and the second sub-signal.

As one embodiment, when the second sub-signal is abandoned from being sent in the first time-frequency resource set, and the second sub-signal is released by a corresponding HARQ process number.

As one embodiment, when the second sub-signal is abandoned from being sent in the first time-frequency resource set, and the second sub-signal is used by the corresponding HARQ process number for the dynamic scheduling based PUSCH of the first node.

## Embodiment 8

Embodiment 8 illustrates a schematic diagram of one first node, as shown in FIG. 8. In FIG. 8, the first node has two panels, which are a first panel and a second panel, respectively; and the first panel and the second panel are respectively associated with a first reference signal resource and a second reference signal resource; the two panels can send two independent radio signals in the same block of time-frequency resources.

As one embodiment, the maximum sending power value can be dynamically shared between the first panel and the second panel.

As one embodiment, when the first panel and the second panel are used simultaneously, the sum of the maximum sending power value of the first panel and the maximum transmit power value of the second panel is not greater than a first threshold value.

As one embodiment, when the first panel or the second panel is used alone, the maximum sending power value of the first panel is not greater than a second threshold, or the maximum sending power value of the second panel is not greater than a third threshold; and the sum of the second threshold value and the third threshold value is greater than the first threshold value.

As one embodiment, the second threshold value in the present application is exclusive to the first panel.

As one embodiment, the third threshold value in the present application is exclusive to the second panel.

As one embodiment, the first panel and the second panel are respectively associated with the first reference signal resource group and the second reference signal resource group.

## Embodiment 9

Embodiment 9 illustrates a schematic diagram of an antenna port and an antenna port group, as shown in FIG. 9.

In Embodiment 9, one antenna port group comprises a positive integer number of antenna ports; one antenna port is formed by superimposing antennas in a positive integer number of antenna groups by antenna virtualization; and one antenna group comprises a positive integer number of antennas. One antenna group is connected to a baseband processor by one RF (Radio Frequency) chain, and different antenna groups correspond to different RF chains. The coefficients of mapping of all antennas in the positive integer number of antenna groups comprised in a given antenna port to the given antenna port constitute the beamforming vector corresponding to the given antenna port. The coefficients of mapping of a plurality of antennas comprised in any given antenna group in the positive integer number of antenna groups comprised in the given antenna port to the given antenna port constitute the analog beamforming vector of the given antenna group. The analog beamforming vectors corresponding to the positive integer number of antenna groups are arranged diagonally to form the analog beamforming matrix corresponding to the given antenna port. The coefficients of mapping of the positive integer number of antenna groups to the given antenna port constitute the digital beamforming vector corresponding to the given antenna port. The beamforming vector corresponding to the given antenna port is obtained by a product of the analog beamforming matrix corresponding to the given antenna port and the digital beamforming vector. Different antenna ports in one antenna port group are composed of the same antenna group, and different antenna ports in the same antenna port group correspond to different beamforming vectors.

FIG. 9 shows two antenna port groups: an antenna port group #0 and an antenna port group #1. Therein, the antenna port group #0 is composed of an antenna group #0, and the antenna port group #1 is composed of an antenna group #1 and an antenna group #2. The coefficients of mapping of the plurality of antennas in the antenna group #0 to the antenna port group #0 constitute an analog beamforming vector #0, and the coefficients of mapping of the antenna group #0 to the antenna port group #0 constitute a digital beamforming vector #0. The coefficients of mapping of the plurality of antennas in the antenna group #1 and the plurality of antennas in the antenna group #2 to the antenna port group #1 constitute the analog beamforming vector #1 and the analog beamforming vector #2, respectively; and the coefficients of mapping of the antenna group #1 and the antenna group #2 to the antenna port group #1 constitute the digital beamforming vector #1. The beamforming vector corresponding to any antenna port in the antenna port group #0 is obtained by a product of the analog beamforming vector #0 and the digital beamforming vector #0. The beamforming vector corresponding to any antenna port in the antenna port group #1 is obtained by a product of the analog beamforming matrix formed by diagonally arranging the analog beamforming vector #1 and the analog beamforming vector #2, and the digital beamforming vector #1.

As one sub-embodiment, one antenna port group comprises one antenna port. For example, the antenna port group #0 in FIG. 9 comprises one antenna port.

As one subsidiary embodiment of the above-mentioned sub-embodiment, the analog beamforming matrix corresponding to the one antenna port is dimensionally reduced to the analog beamforming vector, the digital beamforming vector corresponding to the one antenna port is dimensionally reduced to one scalar, and the beamforming vector corresponding to the one antenna port is equal to the analog beamforming vector corresponding to the one antenna port.

As one sub-embodiment, one antenna port group comprises a plurality of antenna ports. For example, the antenna port group #1 in FIG. 9 comprises a plurality of antenna ports.

As one subsidiary embodiment of the above-mentioned sub-embodiment, the plurality of antenna ports correspond to the same analog beamforming matrix and different digital beamforming vectors.

As one sub-embodiment, antenna ports in different antenna port groups correspond to different analog beamforming matrices.

As one sub-embodiment, any two antenna ports in one antenna port group are QCL (Quasi-Colocated).

As one sub-embodiment, any two antenna ports in one antenna port group are spatial QCL.

As one embodiment, the plurality of antenna port groups in the figure correspond to one panel in the present application.

As one embodiment, the first reference signal resource corresponds to a plurality of antenna port groups.

As one embodiment, the second reference signal resource corresponds to a plurality of antenna port groups.

As one embodiment, the first reference signal resource corresponds to one antenna port group.

As one embodiment, the second reference signal resource corresponds to one antenna port group.

As one embodiment, the first reference signal resource group corresponds to one antenna port group.

As one embodiment, the second reference signal resource group corresponds to one antenna port group.

As one embodiment, one reference signal resource in the first reference signal resource group corresponds to one antenna port group.

As one embodiment, one reference signal resource in the second reference signal resource group corresponds to one antenna port group.

## Embodiment 10

Embodiment 10 illustrates a structural block diagram in one first node, as shown in FIG. 10. In FIG. 10, the first node 1000 comprises a first receiver 1001 and a first transmitter 1002.

The first receiver 1001 receives a first signaling, the first signaling being used for determining a first time-frequency resource set; and

the first transmitter 1002 determines a first power value and a second power value, and sends in the first time-frequency resource set at least a first sub-signal among the first sub-signal or a second sub-signal;

in Embodiment 10, the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the sum of the first power value and the second power value is not greater than a first threshold value, and the first transmitter 1002 sends in the first time-frequency resource set the first sub-signal and the second sub-signal.

As one embodiment, the sum of the first power value and the second power value is greater than a first threshold value, and the first transmitter 1002 sends in the first time-frequency resource set the first sub-signal among the first sub-signal and the second sub-signal.

As one embodiment, the sum of the first power value and the second power value is greater than the first threshold value, and the first transmitter 1002 abandons sending in the first time-frequency resource set the second sub-signal.

As one embodiment, the first signaling is associated with one configured grant index, and the first sub-signal and the second sub-signal are both directed at the configured grant index.

As one embodiment, the first signaling comprises a first parameter and a second parameter, the first parameter is used for determining a power control loop used by the first sub-signal, and the second parameter is used for determining a power control loop used by the second sub-signal.

As one embodiment, a configured grant information block comprises a third parameter and a fourth parameter, the third parameter is used for determining P0 and Alpha used by the first sub-signal, and the fourth parameter is used for determining P0 and Alpha used by the second sub-signal.

As one embodiment, the first signaling comprises a fifth parameter, and the fifth parameter is simultaneously applied to the first sub-signal and the second sub-signal; and the fifth parameter is related to resource allocation.

As one embodiment, the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

As one embodiment, when the first signal does not comprise the second sub-signal, the first sub-signal carries first information, and the first information is used for indicating that only the first sub-signal among the first sub-signal and the second sub-signal is sent in the first time-frequency resource set, or the first information is used for indicating that the second sub-signal is abandoned from being sent in the first time-frequency resource set.

As one embodiment, the priority corresponding to the second sub-signal is lower than the priority corresponding to the first sub-signal.

As one embodiment, the first receiver 1001 comprises at least the first four of the antenna 452, the receiving device 454, the multi-antenna receiving processor 458, the receiving processor 456, and the controller/processor 459 in Embodiment 4.

As one embodiment, the first transmitter 1002 comprises at least the first four of the antenna 452, the transmitting device 454, the multi-antenna transmitting processor 457, the transmitting processor 468, and the controller/processor 459 in Embodiment 4.

## Embodiment 11

Embodiment 11 illustrates a structural block diagram in one second node, as shown in FIG. 11. In FIG. 11, the second node 1100 comprises a second transmitter 1101 and a second receiver 1102.

The second transmitter 1101 sends a first signaling, the first signaling being used for determining a first time-frequency resource set; and

> the second receiver 1102 receives in a first time-frequency resource set at least a first sub-signal among the first sub-signal or a second sub-signal; in Embodiment 11, the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

As one embodiment, the sum of the first power value and the second power value is not greater than a first threshold value, and the second receiver 1102 receives in the first time-frequency resource set the first sub-signal and the second sub-signal.

As one embodiment, the sum of the first power value and the second power value is greater than the first threshold value, and the second receiver 1102 receives in the first time-frequency resource set the first sub-signal among the first sub-signal and the second sub-signal.

As one embodiment, the sum of the first power value and the second power value is greater than the first threshold value, and the second receiver 1202 abandons receiving in the first time-frequency resource set the second sub-signal.

As one embodiment, the first signaling is associated with one configured grant index, and the first sub-signal and the second sub-signal are both directed at the configured grant index.

As one embodiment, the first signaling comprises a first parameter and a second parameter, the first parameter is used for determining a power control loop used by the first sub-signal, and the second parameter is used for determining a power control loop used by the second sub-signal.

As one embodiment, a configured grant information block comprises a third parameter and a fourth parameter, the third parameter is used for determining P0 and Alpha used by the first sub-signal, and the fourth parameter is used for determining P0 and Alpha used by the second sub-signal.

As one embodiment, the first signaling comprises a fifth parameter, and the fifth parameter is simultaneously applied to the first sub-signal and the second sub-signal; and the fifth parameter is related to resource allocation.

As one embodiment, the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

As one embodiment, when the first signal does not comprise the second sub-signal, the first sub-signal carries first information, and the first information is used for indicating that only the first sub-signal among the first sub-signal and the second sub-signal is sent in the first time-frequency resource set, or the first information is used for indicating that the second sub-signal is abandoned from being sent in the first time-frequency resource set.

As one embodiment, the priority corresponding to the second sub-signal is lower than the priority corresponding to the first sub-signal.

As one embodiment, the second transmitter 1101 comprises at least the first four of the antenna 420, the transmitting device 418, the multi-antenna transmitting processor 471, the transmitting processor 414, and the controller/processor 475 in Embodiment 4.

As one embodiment, the second receiver 1102 comprises at least the first four of the antenna 420, the receiving device 418, the multi-antenna receiving processor 472, the receiving processor 470, and the controller/processor 475 in Embodiment 4.

Those skilled in the art can understand that all or parts of the steps in the above-mentioned method can be completed by instructing the relevant hardware by a program, and the program can be stored in a computer-readable storage medium, such as a read-only memory, a hard disk or an optical disk. Optionally, all or parts of the steps in the above-mentioned embodiments can also be implemented by using one or more integrated circuits. Correspondingly, each module unit in the above-mentioned embodiments can be implemented in the form of hardware or in the form of a software function module. The present application is not limited to any specific form of combinations of software and hardware. The first node in the present application includes but is not limited to a mobile phone, a tablet computer, a notebook, a network card, a low-power device, an eMTC device, an NB-IoT device, a vehicle-mounted communication device, a transportation vehicle, a vehicle, an RSU (Road Side Unit), an aircraft, an airplane, a drone, a remote-controlled aircraft and other wireless communication devices. The second node in the present application includes but is not limited to a macro cell base station, a micro cell base station, a small cell base station, a femto cell, a relay base station, an eNB, a gNB, a transmission receiving node TRP, a GNSS (Global Navigation Satellite System), a relay satellite, a satellite base station, an air base station, an RSU, a drone, a test device, for example, a transceiver or a signaling tester that simulates some functions of a base station, and other wireless communication devices.

Those skilled in the art should understand that the present invention can be implemented in other specified forms without departing from the core or basic features thereof. Therefore, the embodiments currently disclosed should be regarded to be descriptive rather than restrictive in any way. The scope of the invention is determined by the appended claims rather than the preceding description, and all changes within their equivalent meanings and areas are deemed to be included therein.

## Claims

1. A first node used for wireless communication, comprising:

   a first receiver for receiving a first signaling, the first signaling being used for determining a first time-frequency resource set; and
   a first transmitter for determining a first power value and a second power value, and sending in the first time-frequency resource set at least a first sub-signal among the first sub-signal or a second sub-signal,
   wherein the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

2. The first node according to claim 1, wherein when the sum of the first power value and the second power value is not greater than a first threshold value, the second sub-signal is sent in the first time-frequency resource set; and when the sum of the first power value and the second power value is greater than the first threshold value, the second sub-signal is abandoned from being sent in the first time-frequency resource set.

3. The first node according to claim 1 or 2, wherein the first signaling is associated with one configured grant index, and the first sub-signal and the second sub-signal are both directed at the configured grant index.

4. The first node according to any one of claims 1 to 3, wherein the first signaling comprises a first parameter and a second parameter, the first parameter is used for determining a power control loop used by the first sub-signal, and the second parameter is used for determining a power control loop used by the second sub-signal.

5. The first node according to any one of claims 1 to 4, wherein a configured grant information block comprises a third parameter and a fourth parameter, the third parameter is used for determining P0 and Alpha used by the first sub-signal, and the fourth parameter is used for determining P0 and Alpha used by the second sub-signal.

6. The first node according to any one of claims 1 to 5, wherein the first signaling comprises a fifth parameter, and the fifth parameter is simultaneously applied to the first sub-signal and the second sub-signal; and the fifth parameter is related to resource allocation.

7. The first node according to any one of claims 1 to 6, wherein the first signaling comprises a sixth parameter, the sixth parameter is used for determining a first integer, the first integer corresponds to a quantity of HARQ processes occupied by configured grant transmission corresponding to the first signaling, and the first integer is a positive integer greater than 1; and an HARQ process number corresponding to the first sub-signal and an HARQ process number corresponding to the second sub-signal are both related to the first integer.

8. The first node according to any one of claims 1 to 7, wherein when a first signal does not comprise the second sub-signal, the first sub-signal carries first information, and the first information is used for indicating that only the first sub-signal among the first sub-signal and the second sub-signal is sent in the first time-frequency resource set, or the first information is used for indicating that the second sub-signal is abandoned from being sent in the first time-frequency resource set.

9. A second node used for wireless communication, comprising:

a second transmitter for sending a first signaling, the first signaling being used for determining a first time-frequency resource set; and
a second receiver for receiving in the first time-frequency resource set at least a first sub-signal among the first sub-signal or a second sub-signal,
wherein the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

10. A method used for a first node of wireless communication, comprising:

receiving a first signaling, the first signaling being used for determining a first time-frequency resource set; and
determining a first power value and a second power value, and sending in the first time-frequency resource set at least a first sub-signal among the first sub-signal or a second sub-signal,
wherein the first sub-signal and the second sub-signal correspond to a first transport block and a second transport block, respectively; sending power of the first sub-signal is the first power value, and the second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

11. A method used for a second node of wireless communication, comprising:

sending a first signaling, the first signaling being used for determining a first time-frequency resource set; and
receiving in the first time-frequency resource set at least a first sub-signal among the first sub-signal or a second sub-signal,
wherein the first sub-signal and the second sub-signal correspond to a first transport block and a second transport block, respectively; sending power of the first sub-signal is a first power value, and a second power value is associated with the second sub-signal; the first signaling is used for determining a first reference signal resource and a second reference signal resource, and the first reference signal resource and the second reference signal resource are respectively used for determining the first power value and the second power value; the sum of the first power value and the second power value is used for determining whether the second sub-signal is sent in the first time-frequency resource set; and the first sub-signal and the second sub-signal are both based on transmission of a configured grant.

FIG. 1

FIG. 2

FIG. 3

FIG. 4

FIG. 5

FIG. 6

First signaling ⟨
| powerControlLoopToUse-0 |
| powerControlLoopToUse-1 |
| P0-PUSCH-AlphaSetId-0 |
| P0-PUSCH-AlphaSetId-1 |
| Resource configuration information |
| nrofHARQ-Processes |

⋮

FIG. 7

Beamforming vector formed by first panel

Beamforming vector formed by second panel

First reference signal resource

Second reference signal resource

First node

FIG. 8

Antenna port group #0

Antenna port group #(L1-1)

Analog beamforming vector #0

Analog beamforming vector #1

Analog beamforming vector #2

Antenna group #0

Antenna group #(L1-2)

Antenna group #(L1-1)

Radio frequency chain

Radio frequency chain

Radio frequency chain

Digital beamforming vector #0

Baseband processor

Phase shifter

Antenna

Terminal

Digital beamforming vector #1

FIG. 9

1000

First node

First receiver 1001

First transmitter 1002

FIG. 10

1100

Second node

Second transmitter 1101

Second receiver 1102

FIG. 11

## INTERNATIONAL SEARCH REPORT

| International application No. |
|---|
| **PCT/CN2023/129078** |

**A.    CLASSIFICATION OF SUBJECT MATTER**

H04W 52/14(2009.01)i

According to International Patent Classification (IPC) or to both national classification and IPC

**B.    FIELDS SEARCHED**

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, CNABS, ENTXT, DWPI, 3GPP: 参考信号, 功率, 控制, 多, 两, 面板, 配置, 设定, 授权, 授予, 准予, DCI, multi, NR, panel?, power, control, PC, R17, R18, reference, signal, SRS, SSB, configured, grant

**C.    DOCUMENTS CONSIDERED TO BE RELEVANT**

| Category* | Citation of document, with indication, where appropriate, of the relevant passages | Relevant to claim No. |
|---|---|---|
| A | CN 115280687 A (IDAC HOLDINGS, INC.) 01 November 2022 (2022-11-01) description, paragraphs [0076]-[0172], and figures 1-12 | 1-11 |
| A | CN 114175768 A (NTT DOCOMO INC.) 11 March 2022 (2022-03-11) description, paragraphs [0025]-[0172], and figures 1-5 | 1-11 |
| A | CN 114844540 A (SHANGHAI TUILUO COMMUNICATION TECHNOLOGY PARTNERSHIP ENTERPRISE (LIMITED PARTNERSHIP)) 02 August 2022 (2022-08-02) entire document | 1-11 |
| A | CN 110536394 A (ZTE CORP.) 03 December 2019 (2019-12-03) entire document | 1-11 |
| A | CN 111656841 A (LENOVO (SINGAPORE) PTE. LTD.) 11 September 2020 (2020-09-11) entire document | 1-11 |
| A | CN 115299144 A (SHARP CORP.) 04 November 2022 (2022-11-04) entire document | 1-11 |

☑ Further documents are listed in the continuation of Box C.          ☑ See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **01 February 2024** | **07 February 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/129078** |

| C. | DOCUMENTS CONSIDERED TO BE RELEVANT | |
|---|---|---|
| Category* | Citation of document, with indication, where appropriate, of the relevant passages | Relevant to claim No. |
| A | LENOVO et al. "Enhancements on Multi-TRP for PDCCH, PUCCH and PUSCH" *3GPP TSG RAN WG1 #106-e, R1-2106667,* 27 August 2021 (2021-08-27), entire document | 1-11 |

Form PCT/ISA/210 (second sheet) (July 2022)

## INTERNATIONAL SEARCH REPORT
### Information on patent family members

International application No.

**PCT/CN2023/129078**

| Patent document cited in search report | | | Publication date (day/month/year) | Patent family member(s) | | | Publication date (day/month/year) |
|---|---|---|---|---|---|---|---|
| CN | 115280687 | A | 01 November 2022 | EP | 4104312 | A1 | 21 December 2022 |
| | | | | WO | 2021163689 | A1 | 19 August 2021 |
| | | | | US | 2023078339 | A1 | 16 March 2023 |
| CN | 114175768 | A | 11 March 2022 | WO | 2020230220 | A1 | 19 November 2020 |
| | | | | EP | 3968707 | A1 | 16 March 2022 |
| | | | | US | 2022217647 | A1 | 07 July 2022 |
| | | | | JP | WO2020230220 | A1 | 19 November 2020 |
| CN | 114844540 | A | 02 August 2022 | US | 2022247530 | A1 | 04 August 2022 |
| CN | 110536394 | A | 03 December 2019 | US | 2022201619 | A1 | 23 June 2022 |
| | | | | EP | 3952484 | A1 | 09 February 2022 |
| | | | | WO | 2020199956 | A1 | 08 October 2020 |
| CN | 111656841 | A | 11 September 2020 | WO | 2019159008 | A1 | 22 August 2019 |
| | | | | US | 2021211988 | A1 | 08 July 2021 |
| | | | | KR | 20200120637 | A | 21 October 2020 |
| | | | | US | 2019261280 | A1 | 22 August 2019 |
| | | | | EP | 3753338 | A1 | 23 December 2020 |
| | | | | EP | 3753339 | A1 | 23 December 2020 |
| | | | | EP | 4152869 | A1 | 22 March 2023 |
| | | | | WO | 2019159002 | A1 | 22 August 2019 |
| | | | | US | 2019261281 | A1 | 22 August 2019 |
| CN | 115299144 | A | 04 November 2022 | US | 2023188286 | A1 | 15 June 2023 |
| | | | | WO | 2021192549 | A1 | 30 September 2021 |

Form PCT/ISA/210 (patent family annex) (July 2022)